# FASCICULE DE BREVET EUROPEEN

(11) **EP 4 115 090 B1**
(45) Date de publication et mention de la délivrance du brevet: **10.05.2023**
(21) Numéro de dépôt: 21707746.0
(22) Date de dépôt: 02.03.2021
(51) Int. Cl.: F04D 29/16, F04D 29/32, F04D 19/02

(54) **AUBE POUR COMPRESSEUR DE TURBOMACHINE**
SCHAUFEL FÜR EINEN TURBINENMOTORVERDICHTER
BLADE FOR A TURBINE ENGINE COMPRESSOR

(30) Priorité: 02.03.2020 BE 202005140
(43) Date de publication de la demande: 11.01.2023
(73) Titulaire: Safran Aero Boosters SA, 4041 Herstal (BE)
(72) Inventeur: HIERNAUX, Stéphane, 4041 Herstal (BE)
(74) Mandataire: Lecomte & Partners
(86) Numéro de dépôt international: PCT/EP2021/055092
(87) Numéro de publication internationale: WO 2021/175801

(56) Documents cités:
- US-A1- 2008 213 098
- US-A1- 2014 245 753
- US-A1- 2018 298 912

## Description

### Domaine

L'invention a trait à la conception d'une aube de compresseur de turbomachine et en particulier la géométrie de sa tête. L'invention vise également un compresseur comprenant une roue mobile munie d'une telle aube.

### Art antérieur

Le document WO 2012/080669 A1 décrit une aube de turbomachine présentant une double inversion du sens de sa courbure dans le tiers radialement externe de l'aube.

Une telle conception vise à améliorer les pertes aérodynamiques dues à l'écoulement de fuite en tête d'aube résultant du jeu radial entre les aubes et le carter. Ce jeu radial est nécessaire pour prévenir un contact entre l'aube et le carter qui pourrait survenir à grande vitesse. En effet, dans cette conception, les aubes ne sauraient souffrir d'un contact avec le carter car elles seraient endommagées.

Une alternative non optimale est donnée dans le document US 2014/245753 A1.

Il demeure donc une marge d'amélioration potentielle si le jeu radial peut être réduit.

### Résumé de l'invention

### Problème technique

L'invention a comme problème technique de résoudre les inconvénients des aubes connues de l'état de la technique et en particulier de proposer une conception d'aube qui permet de réduire d'avantage le jeu radial - et donc les écoulements de fuite en tête d'aube - sans risquer d'endommager l'aube en cas de contact avec le carter.

### Solution technique

L'invention a trait à une aube de compresseur s'étendant sensiblement radialement et comprenant une pale dont la géométrie résulte de l'empilement, selon une ligne dite d'empilage, de profils en forme de section d'aile, remarquable en ce que la ligne d'empilage passe par au moins trois points dont un point formant le pied d'aube, un point définissant la tête de l'aube et un point formant l'extrémum radial de la ligne d'empilage, la hauteur radiale du point (F) définissant la tête étant inférieure à la hauteur du point (E) définissant l'extremum radial.

De par cette conception, le contact « pointe/plan » conventionnel de la tête d'aube sur le carter devient un contact « cylindre/plan », ce qui permet une déformation élastique de l'aube en cas de contact et limite l'endommagement de la tête de l'aube.

En outre, la géométrie de la tête de l'aube crée des « obstacles » à l'écoulement radial de l'air. La formation de tourbillons de fuite en tête d'aube est empêchée. Ceci aboutit à un meilleur rendement du compresseur et donc de la turbomachine.

La ligne d'empilage peut s'étendre le long des centres de gravité respectifs des profils ou le long de tout autre point caractéristique de ces profils (bord d'attaque ou de fuite, position relative sur la corde ou la cambrure, par exemple).

L'extrémum radial peut être unique ou alternativement il peut y avoir plusieurs points (une portion de la ligne L au voisinage de E) qui partagent cette même propriété d'extrémum radial.

Selon l'invention, la ligne d'empilage passe trois points, en lesquels la ligne d'empilage change d'orientation tangentielle. Ainsi, dans ces points, la tangente à la ligne d'empilage a une composante tangentielle nulle et la composante tangentielle change de signe d'un côté ou de l'autre de ce(s) point(s).

Selon un mode avantageux de l'invention, un des trois points, est situé entre 85% et 90% de la hauteur radiale de l'aube.

Selon un mode avantageux de l'invention, un des trois points, est situé entre 90% et 92% de la hauteur radiale de l'aube.

Selon un mode avantageux de l'invention, un des trois points, est situé entre 92% et 95% de la hauteur radiale de l'aube.

Selon un mode avantageux de l'invention, la ligne d'empilage peut être localement approximée par un premier segment et un deuxième segment qui forment entre eux un angle compris entre 135° et 175°. Ce premier point d'intersection permet de créer une zone de flexion possible de l'aube permettant le désengagement de l'aube du carter en cas de contact. Ces valeurs représentent un bon compromis car elles permettent, malgré la rigidité de l'aube, une flexion sans déformation substantielle des surfaces au contact du flux d'air.

Selon un mode avantageux de l'invention, l'aube comprend une surface intrados et une surface extrados et les premier et deuxième segments sont agencés l'un par rapport à l'autre de sorte que la ligne d'empilage soit concave du côté intrados au droit du point d'intersection de ces premier et deuxième segments. Cette première flexion est en effet facilitée lorsque la concavité se trouve du côté intrados.

Selon un mode avantageux de l'invention, la ligne d'empilage peut être localement approximée par un/le deuxième segment et un troisième segment qui forment entre eux un angle compris entre 80° et 105°. Ce deuxième point d'intersection des segments crée un « ventre » qui forme un obstacle à la migration radiale du fluide.

Selon un mode avantageux de l'invention, l'aube comprend une surface intrados et une surface extrados et les deuxième et troisième segments sont agencés l'un par rapport à l'autre de sorte que la ligne d'empilage soit convexe du côté intrados au droit du point d'intersection de ces deuxième et troisième segments. Ceci permet à la première et la deuxième flexions de coopérer tel un accordéon pour déformer l'aube essentiellement radialement sans qu'elle ne se déforme circonférentiellem ent.

Les flexions ont lieu en trois dimensions et ces deux premiers points d'intersections permettent donc de former une rotule dans l'aube qui pourra donc subir des contacts avec le carter et se déformer élastiquement en conséquence.

Selon un mode avantageux de l'invention, la ligne d'empilage peut être localement approximée par un/le troisième segment et un quatrième segment qui forment entre eux un angle compris entre 80° et 105°. Cet angle permet de « piéger » l'écoulement d'air en tête d'aube.

Selon un mode avantageux de l'invention, l'aube comprend une surface intrados et une surface extrados et les troisième et quatrième segments sont agencés l'un par rapport à l'autre de sorte que la ligne d'empilage soit convexe du côté extrados au droit du point d'intersection de ces troisième et quatrième segments. Ainsi, une concavité sur l'intrados limite la composante radiale de l'écoulement d'air.

Selon un mode avantageux de l'invention, la ligne d'empilage peut être localement approximée par un/le quatrième segment et un cinquième segment qui forment entre eux un angle compris entre 80° et 105°. Le point d'intersection entre le quatrième segment et le cinquième segment forme l'extrémum radial de la ligne d'empilage, et est situé entre 95% et 98% de la hauteur radiale de la pale. Ce recroquevillement de l'aube permet non seulement un contact avec le carter qui ne détériore pas la géométrie de l'aube sur ses surfaces de guidage de l'air mais permet également de former un obstacle à l'air qui tenterait de fuiter en tête d'aube.

Selon un mode avantageux de l'invention, la portion de la pale définie par les troisième, quatrième et cinquième segments décrit une crosse et la face intrados de la pale au droit de la crosse délimite une alvéole. Par cette conception, il est impossible à l'air de fuiter en tête d'aube.

Les segments peuvent être des éléments finis de droite, rectilignes ou non, concentrés dans une portion de tête de l'aube dans les environ 20% radialement externe de l'aube.

L'invention a également pour objet un compresseur pour turbomachine comprenant un rotor muni d'une pluralité d'aubes selon l'un des modes de réalisation exposés ci-dessus et un carter entourant le rotor.

Préférentiellement, le jeu radial entre l'aube et le carter est égal ou inférieure à 0.5% de la hauteur de l'aube. Cette valeur de jeu faible est rendue possible par la conception de l'aube et évite les écoulements de fuite entre l'aube et le carter au niveau de la tête de l'aube.

### Avantages de l'invention

L'invention est particulièrement avantageuse en ce qu'elle permet des déformations élastiques de l'aube qui peut venir en contact du carter sans de déformer plastiquement et sans détériorer les surfaces fonctionnelles de guidage de l'air. Ainsi, le jeu radial nominal entre les aubes et le carter peut être plus petit que pour d'autres conceptions d'aubes, tout en garantissant la fiabilité de fonctionnement. A l'inverse, pour un jeu identique à ceux de l'état de la technique, la vitesse de rotation permise par le compresseur est plus importante - ce qui permet un taux de compression plus important ou un nombre d'étages de compresseur plus petit et donc un compresseur plus léger et moins encombrant. En outre, la géométrie de la tête de l'aube s'oppose à l'écoulement radial de l'air et à la formation de tourbillons de fuite. Le rendement du compresseur et donc le rendement de la turbomachine sont donc améliorés.

### Description des dessins

La figure 1 décrit partiellement un compresseur de turbomachine ;
La figure 2 décrit une aube de compresseur selon l'état de la technique ;
La figure 3 décrit une vue en coupe partielle d'un compresseur selon l'état de la technique ;
La figure 4 décrit une aube de compresseur selon l'invention ;
La figure 5A décrit une vue en coupe partielle d'un compresseur selon l'invention ;
Les figures 5B et 5C matérialisent la ligne d'empilage ;
Les figures 6 à 9 illustrent d'autres exemples de géométrie d'aube.

### Description d'un mode de réalisation

Dans la description qui va suivre, les termes « interne » et « externe » renvoient à un positionnement par rapport à l'axe de rotation d'une turbomachine. La direction axiale correspond à la direction le long de l'axe de rotation de la turbomachine. La direction radiale est perpendiculaire à l'axe de rotation. La direction tangentielle est perpendiculaire aux directions axiale et radiale. L'amont et l'aval sont en référence au sens d'écoulement principal du flux dans la turbomachine.

Les figures ne sont pas représentées à l'échelle. En particulier, les épaisseurs sont agrandies pour faciliter la lecture des figures.

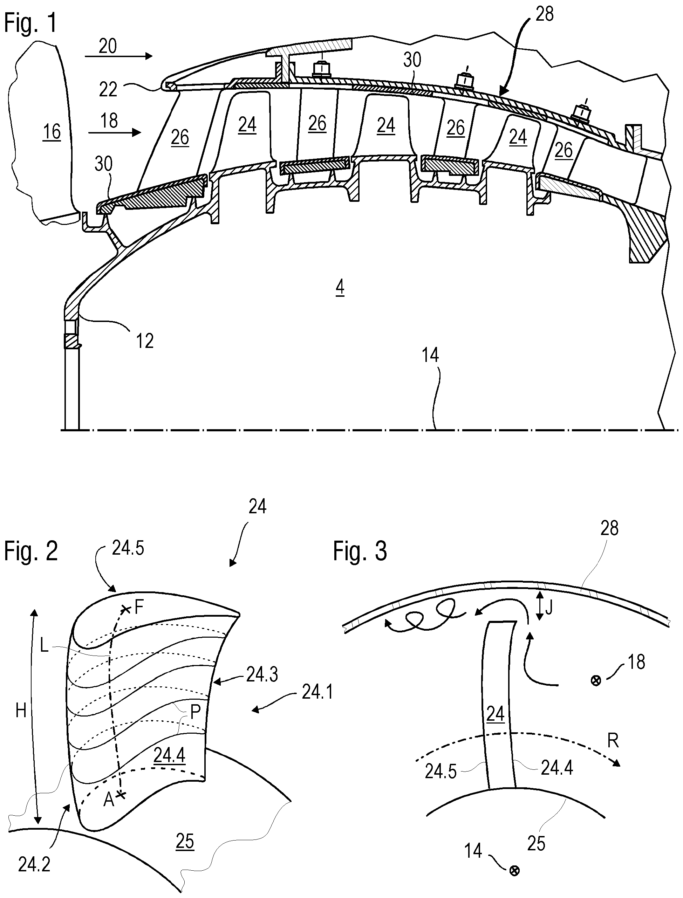

La figure 1 représente de manière simplifiée un compresseur 4 de turbomachine. Il s'agit ici d'un compresseur basse-pression mais les enseignements de la présente demande peuvent également s'appliquer à un compresseur haute-pression.

Le compresseur 4 comprend un rotor 12 qui tourne autour d'un axe 14 et qui est couplé à un fan 16. Le fan 16 génère un flux d'air qui se divise en un flux primaire 18 et un flux secondaire 20 au niveau du bec 22. Le compresseur 4 comprend plusieurs rangées d'aubes rotoriques 24 et plusieurs rangées d'aubes statoriques 26.

Le compresseur 4 comprend un carter 28. Le carter 28 peut présenter une forme généralement circulaire ou tubulaire. Il peut être composé de plusieurs segments angulaires ou être monobloc. Il peut être en matériau composite.

Les aubes rotoriques 24 s'étendent essentiellement radialement. Sur l'exemple illustré, les aubes 24 sont monoblocs avec un tambour 25 pour former le rotor 12. Alternativement, elles peuvent disposer d'une plateforme de fixation à un tambour ou être soudées à une virole tournante. Le rotor 12 peut ainsi être fait de plusieurs roues mobiles, chacune portant une rangée annulaire d'aubes rotoriques 24.

L'extrémité radiale externe des aubes 24 vient en regard du carter 28. Sur l'exemple illustré, une couche de matériau abradable 30 est agencée au droit de l'extrémité radiale externe des aubes 24.

La figure 2 représente en vue isométrique une aube rotorique 24 connue. L'aube 24 comprend une pale 24.1 et des éléments de fixation (non représentés). La pale 24.1 comprend un bord d'attaque 24.2, un bord de fuite 24.3, un intrados 24.4 et un extrados 24.5.

La géométrie de la pale 24.1 peut être définie à l'aide de profils P empilés selon une ligne d'empilage L, par exemple passant par les centres de gravité des profils P.

La ligne d'empilage L s'étend d'un point A de la pale 24.1 définissant son extrémité de pied à un point F de la pale 24.1 définissant son extrémité de tête.

La hauteur radiale de l'aube (distance entre les coordonnées radiales des points A et F) est notée H.

La figure 3 est une vue partielle dans un plan perpendiculaire à l'axe 14. L'aube 24 et le tambour 25 tournent dans une direction de rotation R pour comprimer le flux d'air 18.

Au niveau de la tête de l'aube, un jeu radial J est prévu entre l'aube 24 et le carter 28, afin d'assurer une rotation de l'aube 24 sans frottement sur le carter 28, ou de minimiser les probabilités de contact entre l'aube 24 et le carter 28.

Ce jeu J entraîne un écoulement de fuite (flèche en trait plein). En effet, un écoulement d'air avec une composante radiale le long de l'intrados atteint le jeu et suite au passage de l'aube 24 génère des tourbillons qui se propagent axialement vers l'aval et détériorent l'écoulement du flux en aval de l'aube 24. Les géométries connues présentent un jeu J qui est de 0.8% à 2% de H, selon la position de l'aube dans le compresseur (jeu supérieur en aval).

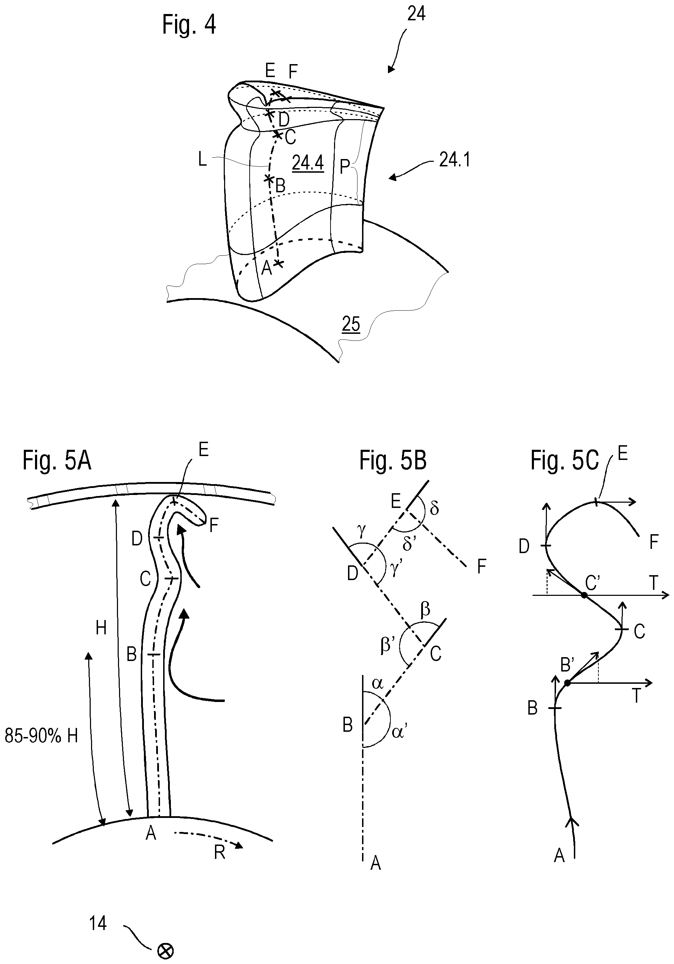

La figure 4 illustre une aube 24 selon un premier mode de réalisation de l'invention. Celle-ci diffère de l'aube 24 de la figure 3 par sa géométrie et en particulier par la géométrie de la ligne d'empilage L.

Dans cet exemple, la ligne L passe par les points A, B, C, D, E et F.

Il est à noter que les figures ne sont pas à l'échelle, les points B, C, D, E et F étant regroupés dans les 20% radialement externes de l'aube. Dit autrement, la distance AB mesure au moins 80% de la hauteur H de l'aube (hauteur H qui peut être définie ici comme la distance entre le point A, pied de l'aube et le point de la pale le plus éloigné de l'axe 14, soit, la coordonnée radiale de E additionnée de la demi épaisseur de l'aube au point E).

La ligne L peut être approximée par des segments de droite (par exemple au sens des moindres carrés). Pour schématiser la forme de la ligne L, la figure 5B illustre les segments AB, BC, CD, DE et EF, qui forment deux à deux des angles respectifs (α, β, γ, δ), mesurés respectivement dans le prolongement d'un des segments selon l'orientation A vers F de la ligne L. α est préférentiellement compris entre 5° et 45°. Les autres angles sont, indépendamment, compris entre 75° et 120°. Les angles supplémentaires sont respectivement notés α', β', γ', δ'.

Les positions radiales des points sont choisies indépendamment l'une de l'autre. B est à une position radiale par rapport à A qui est comprise entre 85% et 90% de la hauteur H ; C est à une position radiale par rapport à A comprise entre 90% et 92% de H ; D est à une position radiale par rapport à A comprise entre 92% et 95% de H ; E est à une position radiale par rapport à A comprise entre 95% et 98% de H et F est à une position radiale par rapport à A comprise entre 90% et 95% de H.

Ces choix pertinents d'angles et de positions des points de la ligne d'empilage L permettent d'obtenir un certain nombre d'effets qui synergétiquement aboutissent à une géométrie optimale pour l'aube.

Grâce à cette géométrie, le jeu radial entre la tête de l'aube et le carter peut être réduit par rapport à une aube conventionnelle. On aura un jeu de l'ordre de 0.5% de H pour toutes les aubes (aussi bien amont qu'aval), ce qui réduit considérablement les écoulements de fuite en tête d'aube.

On notera, entre autres, que les points B, C et D créent une bosse sur l'intrados au point C qui fait obstacle à un écoulement radial. Les points D, E et F forment une crosse 24.6 qui délimite une alvéole 32 sur l'intrados, pour « piéger » l'air.

Le point B permet de définir un point de flexion possible de l'aube. Les points C et D peuvent également jouer ce rôle. En au moins l'un de ces points, la ligne L change d'orientation tangentielle, c'est-à-dire que la droite tangente à la ligne L en ces points est orientée radialement.

La figure 5C illustre les tangentes (flèches) à la ligne L en différents points. La direction tangentielle est indiquée par la flèche T. On voit par exemple au point B' et C', respectivement placés entre B et C, et entre C et D, que la tangente à la ligne L (ligne qui est orientée de A à F) change d'orientation tangentielle. Chacune des tangente est composée d'une composante radiale (en pointillés) et d'une composante tangentielle qui est positive au point B', nulle au point C et négative au point C'. Ainsi, le point C est un point en lequel la tangente à la courbe change de sens tangentiellement. Les points B et D peuvent avoir la même propriété.

Le point E, extrémum radial de la ligne d'empilage L permet de contrôler la zone de contact éventuel avec le carter. En ce point, la tangente à la ligne L est purement tangentielle et a une composante radiale nulle. E est donc un point où la tangente change d'orientation radiale : la composante radiale d'un point de la ligne entre A et E (E exclus) a une composante radiale positive alors qu'un point de la ligne L entre E et F (E exclus) a une composante radiale négative. Le point E peut être unique ou alternativement il peut y avoir plusieurs points (une portion de la ligne L) qui partagent cette même propriété d'extrémum radial avec une tangente à la ligne L en ces points qui est purement tangentielle.

Ainsi, si on considère la ligne L comme une ligne orientée, avec une orientation de A vers F, la ligne d'empilage L est une ligne qui comprend une portion de tête (10 à 15% externe) composée de plusieurs segments dont un segment (DE) ayant une orientation, prise dans le sens de l'orientation de la ligne, dont la composante radiale est positive, contigu à un segment (EF) ayant une orientation, prise dans le sens de l'orientation de la ligne, dont la composante radiale est négative, ce dernier segment se terminant par le point d'extrémité de tête F.

Autrement dit, dans le sens de l'empilement (i.e. de A vers F), avant le point E, les coordonnées radiales des points de la ligne d'empilement sont croissantes, et après le point d'intersection, les coordonnées radiales des points de la ligne sont décroissantes.

Si l'exemple des figures 4 et 5B décrit une ligne d'empilage L avec 5 segments, il est à noter que chacun des segments peut être prévu indépendamment des autres comme l'illustrent les figures suivantes, l'aube selon l'invention présentant au moins deux de ces segments.

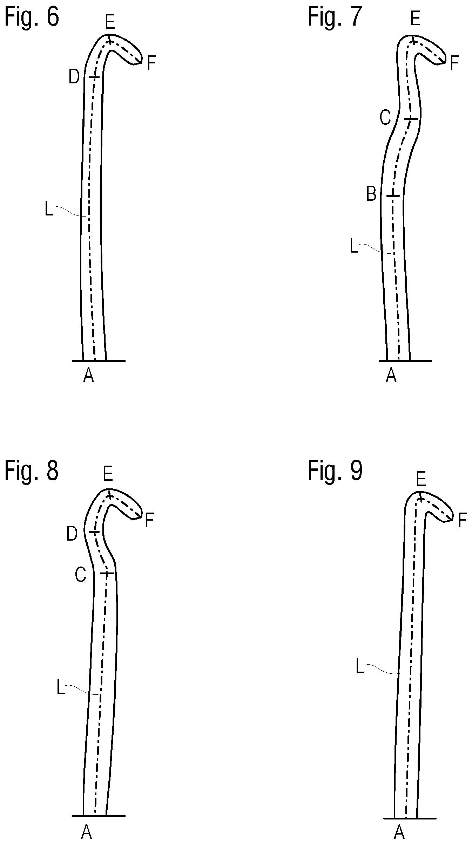

Sur l'exemple de la figure 6, la ligne L ne comporte que les points A, D, E et F.

En figure 7 est représentée une aube dont la ligne L ne comporte que les points A, B, C, E et F.

La ligne L de la figure 8 est exempte du point B.

D'autres exemples sont possibles comme celui illustré en figure 9 dans lequel seuls les points A, E et F sont présents.

La géométrie décrite ici ne s'attarde pas sur la géométrie de la pale entre les points A et B, qui a peu d'influence sur les turbulences en tête de l'aube et qui pourra donc être choisie conformément à des aubes connues de l'état de la technique.

Il est à noter également que le mot « segment » est ici employé pour définir une portion de longueur finie d'une ligne sensiblement droite. La géométrie de la pale suit la géométrie de la ligne L avec des rayons de raccordement, les surfaces en contact avec le flux d'air ne présentant pas de points anguleux ou de coins.

## Revendications

1. Aube (24) de compresseur (4) s'étendant sensiblement radialement et comprenant une pale (24.1) dont la géométrie résulte de l'empilement, selon une ligne (L) dite d'empilage, de profils (P) en forme de section d'aile, **caractérisée en ce que** la ligne d'empilage (L) passe par au moins trois points (A, E, F) dont un point (A) formant le pied d'aube (24), un point (F) définissant la tête de l'aube (24) et un point (E) formant l'extrémum radial de la ligne d'empilage (L), la hauteur radiale du point (F) définissant la tête étant inférieure à la hauteur radiale du point (E) définissant l'extremum radial, la ligne d'empilage (L) passant également par au moins trois points (B, C, D) en lesquels la ligne d'empilage (L) change d'orientation tangentielle.

2. Aube (24) selon la revendication 1, **caractérisée en ce qu'**un des trois points (B) en lesquels la ligne d'empilage (L) change d'orientation tangentielle, est situé entre 85% et 90% de la hauteur radiale (H) de l'aube (24).

3. Aube (24) selon la revendication 1 ou 2, **caractérisée en ce qu'**un des trois points (C) en lesquels la ligne d'empilage (L) change d'orientation tangentielle, est situé entre 90% et 92% de la hauteur radiale (H) de l'aube (24).

4. Aube (24) selon l'une des revendications 1 à 3, **caractérisée en ce qu'**un des trois points (D) en lesquels la ligne d'empilage (L) change d'orientation tangentielle, est situé entre 92% et 95% de la hauteur radiale (H) de l'aube (24).

5. Aube (24) selon l'une des revendications 1 à 4, **caractérisée en ce que** la ligne d'empilage (L) peut être localement approximée par un premier segment (AB) et un deuxième segment (BC) qui forment entre eux un angle (α') compris entre 135° et 175°.

6. Aube (24) selon la revendication 5, **caractérisée en ce que** l'aube (24) comprend une surface intrados (24.4) et une surface extrados (24.5) et les premier et deuxième segments (AB, BC) sont agencés l'un par rapport à l'autre de sorte que la ligne d'empilage (L) soit concave du côté intrados (24.4) au droit du point d'intersection (B) de ces premier et deuxième segments (AB, BC).

7. Aube (24) selon l'une des revendications 1 à 6, **caractérisée en ce que** la ligne d'empilage (L) peut être localement approximée par un/le deuxième segment (BC) et un troisième segment (CD) qui forment entre eux un angle (β') compris entre 60° et 105°.

8. Aube (24) selon la revendication 7, **caractérisée en ce que** l'aube (24) comprend une surface intrados (24.4) et une surface extrados (24.5) et les deuxième et troisième segments (BC, CD) sont agencés l'un par rapport à l'autre de sorte que la ligne d'empilage (L) soit convexe du côté intrados (24.5) au droit du point d'intersection (C) de ces deuxième et troisième segments (BC, CD).

9. Aube (24) selon l'une des revendications 1 à 8, **caractérisée en ce que** la ligne d'empilage (L) peut être localement approximée par un/le troisième segment (CD) et un quatrième segment (DE) qui forment entre eux un angle (γ') compris entre 60° et 105°.

10. Aube (24) selon la revendication 9, **caractérisée en ce que** l'aube (24) comprend une surface intrados (24.4) et une surface extrados (24.5) et les troisième et quatrième segments (CD, DE) sont agencés l'un par rapport à l'autre de sorte que la ligne d'empilage (L) soit convexe du côté extrados au droit du point d'intersection (D) de ces troisième et quatrième segments (CD, DE).

11. Aube (24) selon l'une des revendications 1 à 10, **caractérisée en ce que** la ligne d'empilage (L) peut être localement approximée par un/le quatrième segment (DE) et un cinquième segment (EF) qui forment entre eux un angle (δ') compris entre 60° et 105°.

12. Aube (24) selon la revendication 11, **caractérisée en ce que** le point d'intersection (E) entre le quatrième segment (DE) et le cinquième segment (EF) forme l'extrémum radial de la ligne d'empilage (L), et est situé entre 95% et 98% de la hauteur radiale (H) de la pale (24.1).

13. Aube (24) selon l'une des revendications 7 à 12, **caractérisée en ce que** la portion de la pale (24.1) définie par les troisième, quatrième et cinquième segments (CD, DE, EF) décrit une crosse (24.6) et la face intrados (24.4) de la pale (24.1) au droit de la crosse (24.6) délimite une alvéole (32).

14. Compresseur (4) pour turbomachine comprenant un rotor (12) muni d'une pluralité d'aubes (24) selon l'une des revendications précédentes et un carter (28) entourant le rotor (12).

15. Compresseur (4) selon la revendication 14, **caractérisé en ce que** le jeu radial entre l'aube (24) et le carter (28) est égal ou inférieure à 0.5% de la hauteur (H) de l'aube (24).

## Patentansprüche

1. Eine Schaufel (24) eines Verdichters (4), die sich im Wesentlichen radial erstreckt und eine Schaufel (24.1), deren Geometrie sich aus der Stapelung von Profilen (P) in Form eines Flügelprofils entlang einer sogenannten Stapellinie (L) ergibt, **dadurch gekennzeichnet, dass** die Stapellinie (L) durch mindestens drei Punkte (A, E, F) verläuft, von denen einer (A) den Fuß der Schaufel (24) bildet, ein anderer (F) den Kopf der Schaufel (24) definiert und ein anderer (E) das radiale Ende der Stapellinie (L) bildet, wobei die radiale Höhe des Punktes (F), der den Kopf definiert, geringer ist als die radiale Höhe des Punktes (E), der das radiale Ende definiert, wobei die Stapellinie (L) außerdem durch mindestens drei Punkte (B, C, D) verläuft, an denen die Stapellinie (L) ihre tangentiale Ausrichtung ändert.

2. Eine Schaufel (24) nach Anspruch 1, **dadurch gekennzeichnet, dass** einer der drei Punkte (B), an denen die Stapellinie (L) ihre tangentiale Ausrichtung ändert, zwischen 85% und 90% der radialen Höhe (H) der Schaufel (24) beträgt.

3. Eine Schaufel (24) nach einem der Ansprüche 1 und 2, **dadurch gekennzeichnet, dass** einer der drei Punkte (C), an denen die Stapellinie (L) ihre tangentiale Ausrichtung ändert, zwischen 90% und 92% der radialen Höhe (H) der Schaufel (24) beträgt.

4. Eine Schaufel (24) nach einem der Ansprüche 1 bis 3, **dadurch gekennzeichnet, dass** einer der drei Punkte (D), an denen die Stapellinie (L) ihre tangentiale Ausrichtung ändert, zwischen 92% und 95% der radialen Höhe (H) der Schaufel (24) beträgt.

5. Eine Schaufel (24) nach einem der Ansprüche 1 bis 4, **dadurch gekennzeichnet, dass** die Stapellinie (L) lokal durch ein erstes Segment (AB) und ein zweites Segment (BC) angenähert werden kann, die zwischen sich einen Winkel (α') zwischen 135° und 175° bilden.

6. Eine Schaufel (24) nach Anspruch 5, **dadurch gekennzeichnet, dass** die Schaufel (24) eine Druckseite (24.4) und eine Saugseite (24.5) aufweist und die ersten und zweiten Segmente (AB, BC) so zueinander angeordnet sind, dass die Stapellinie (L) auf der Druckseite (24.4) am Schnittpunkt (B) dieser ersten und zweiten Segmente (AB, BC) konkav ist.

7. Eine Schaufel (24) nach einem der Ansprüche 1 bis 6, **dadurch gekennzeichnet, dass** die Stapellinie (L) lokal durch ein zweites Segment (BC) und ein drittes Segment (CD) angenähert werden kann, die zwischen sich einen Winkel (β') zwischen 60° und 105° bilden.

8. Eine Schaufel (24) nach Anspruch 7, **dadurch gekennzeichnet, dass** die Schaufel (24) eine Druckseite (24.4) und eine Saugseite (24.5) aufweist und das zweite und dritte Segment (BC, CD) so zueinander angeordnet sind, dass die Stapellinie (L) auf der Druckseite (24.5) am Schnittpunkt (C) dieser zweiten und dritten Segmente (BC, CD) konvex ist.

9. Eine Schaufel (24) nach einem der Ansprüche 1 bis 8, **dadurch gekennzeichnet, dass** die Stapellinie (L) lokal durch ein drittes Segment (CD) und ein viertes Segment (DE) angenähert werden kann, die zwischen sich einen Winkel (γ') zwischen 60° und 105° bilden.

10. Eine Schaufel (24) nach Anspruch 9, **dadurch gekennzeichnet, dass** die Schaufel (24) eine Druckfläche (24.4) und eine Saugfläche (24.5) aufweist und das dritte und vierte Segment (CD, DE) so zueinander angeordnet sind, dass die Stapellinie (L) auf der Saugseite am Schnittpunkt (D) dieser dritten und vierten Segmente (CD, DE) konvex ist.

11. Eine Schaufel (24) nach einem der Ansprüche 1 bis 10, **dadurch gekennzeichnet, dass** die Stapellinie (L) lokal durch ein viertes Segment (DE) und ein fünftes Segment (EF) angenähert werden kann, die zwischen sich einen Winkel (δ') zwischen 60° und 105° bilden.

12. Eine Schaufel (24) nach Anspruch 11, **dadurch gekennzeichnet, dass** der Schnittpunkt (E) zwischen dem vierten Segment (DE) und dem fünften Segment (EF) das radiale Ende der Stapellinie (L) bildet und zwischen 95% und 98% der radialen Höhe (H) der Schaufel (24.1) liegt.

13. Eine Schaufel (24) nach einem der Ansprüche 7 bis 12, **dadurch gekennzeichnet, dass** der durch das dritte, vierte und fünfte Segment (CD, DE, EF) definierte Teil der Schaufel (24.1) eine Krümmung (24.6) beschreibt und die Druckseite (24.4) der Schaufel (24.1) an der Krümmung (24.6) einen Hohlraum (32) abgrenzt.

14. Ein Verdichter (4) für eine Turbomaschine mit einem Rotor (12), der mit einer Vielzahl von Schaufeln (24) nach einem der vorhergehenden Ansprüche versehen ist, und einem Gehäuse (28), das den Rotor (12) umgibt.

15. Ein Verdichter (4) nach Anspruch 14, **dadurch gekennzeichnet, dass** das radiale Spiel zwischen der Schaufel (24) und dem Gehäuse (28) gleich oder kleiner als 0,5% der Höhe (H) der Schaufel (24) ist.

## Claims

1. A compressor (4) blade (24) extending substantially radially and comprising an airfoil (24.1) whose geometry results from the stacking, along a so-called stacking line (L), of profiles (P) in the form of a wing section, **characterised in that** the stacking line (L) passes through at least three points (A, E, F), of which one (A) forms the root of the blade (24), another (F) defines the head of the blade (24) and another (E) forms the radial extremum of the stacking line (L), the radial height of the point (F) which defines the head being less than the radial height of the point (E) which defines the radial extremum, the stacking line (L) also passing through at least three points (B, C, D) at which the stacking line (L) changes its tangential orientation.

2. A blade (24) according to claim 1, **characterized in that** one of the three points (B) at which the stacking line (L) changes its tangential orientation, is between 85% and 90% of the radial height (H) of the blade (24).

3. A blade (24) according to either of claims 1 and 2, **characterized in that** one of the three points (C) at which the stacking line (L) changes its tangential orientation, is between 90% and 92% of the radial height (H) of the blade (24).

4. A blade (24) according to one of claims 1 to 3, **characterized in that** one of the three points (D) at which the stacking line (L) changes its tangential orientation, is between 92% et 95% of the radial height (H) of the blade (24).

5. A blade (24) according to one of claims 1 to 4, **characterized in that** the stacking line (L) can be locally approximated by a first segment (AB) and a second segment (BC) which form between them an angle (α') between 135° and 175°.

6. A blade (24) according to claim 5, **characterized in that** the blade (24) comprises a pressure surface (24.4) and a suction surface (24.5), and the first and second segments (AB, BC) are arranged with respect to each other such that the stacking line (L) is concave on the pressure side (24.4) at the point of intersection (B) of these first and second segments (AB, BC).

7. A blade (24) according to one of claims 1 to 6, **characterized in that** the stacking line (L) can be locally approximated by a/the second segment (BC) and a third segment (CD), which form between them an angle (β') between 60° and 105°.

8. A blade (24) according to claim 7, **characterized in that** the blade (24) comprises a pressure surface (24.4) and a suction surface (24.5), and the second and third segments (BC, CD) are arranged with respect to each other such that the stacking line (L) is convex on the pressure side (24.5) at the point of intersection (C) of these second and third segments (BC, CD).

9. A blade (24) according to one of claims 1 to 8, **characterized in that** the stacking line (L) can be locally approximated by a/the third segment (CD) and a fourth segment (DE), which form between them an angle (y') between 60° and 105°.

10. A blade (24) according to claim 9, **characterized in that** the blade (24) comprises a pressure surface (24.4) and a suction surface (24.5) and the third and fourth segments (CD, DE) are arranged with respect to each other such that the stacking line (L) is convex on the suction side at the point of intersection (D) of these third and fourth segments (CD, DE).

11. A blade (24) according to one of claims 1 to 10, **characterized in that** the stacking line (L) can be locally approximated by a/the fourth segment (DE) and a fifth segment (EF), which form between them an angle (δ') between 60° and 105°.

12. A blade (24) according to claim 11, **characterized in that** the point of intersection (E) between the fourth segment (DE) and the fifth segment (EF) forms the radial extremum of the stacking line (L), and is located between 95% and 98% of the radial height (H) of the blade (24.1).

13. A blade (24) according to one of claims 7 to 12, **characterized in that** the portion of the blade (24.1) defined by the third, fourth and fifth segments (CD, DE, EF) describes a crook (24.6) and the pressure side (24.4) of the blade (24.1) at said crook (24.6) demarcates a cavity (32).

14. A compressor (4) for a turbomachine comprising a rotor (12) provided with a plurality of blades (24) according to one of the preceding claims and a housing (28) surrounding the rotor (12).

15. A compressor (4) according to claim 14, **characterized in that** the radial clearance between the blade (24) and the housing (28) is equal to or less than 0.5% of the height (H) of the blade (24).
